# NEUE EUROPÄISCHE PATENTSCHRIFT

(11) **EP 1 557 643 B2**
(45) Veröffentlichungstag und Bekanntmachung des Hinweises auf die Entscheidung über den Einspruch: **24.04.2013**
(45) Hinweis auf die Patenterteilung: 07.06.2006
(21) Anmeldenummer: 05000439.9
(22) Anmeldetag: 12.01.2005
(51) Int. Cl.: G01D 5/02

(54) **Drehwinkelmesseinrichtung**
Angle detector
Capteur d'angle de rotation

(30) Priorität: 23.01.2004 DE 202004001066 U
(43) Veröffentlichungstag der Anmeldung: 27.07.2005
(73) Patentinhaber: SICK STEGMANN GmbH, 78166 Donaueschingen (DE)
(72) Erfinder: Mutschler, Reinhold, 78056 Villingen-Schwenningen (DE)
(74) Vertreter: Ludewigt, Christoph

(56) Entgegenhaltungen:
- EP-A2- 1 225 428
- DE-A1- 10 216 376
- DE-A1- 19 629 585
- JP-A- 2000 046 244
- US-A- 5 018 397

## Beschreibung

Die Erfindung betrifft eine Drehwinkelmesseinrichtung gemäß dem Oberbegriff des Anspruch 1.

Eine derartige Drehwinkelmesseinrichtung ist aus der DE 102 16 376 A1 bekannt, deren Inhalt durch diese Bezugnahme den Offenbarungsgehalt der vorliegenden Anmeldung ergänzt. Die bekannte Drehwinkelmesseinrichtung besteht aus einem Drehgeber, der über eine Statorkupplung verdrehfest mit einem stationären Teil eines zu messenden Antriebs verbindbar ist. Dazu wird das Gehäuse des Drehgebers mittels der Statorkupplung verdrehstarr mit einem Aktorgehäuse der Antriebseinrichtung verbunden, um einen Winkelmessfehler zu vermeiden. Vorzugsweise sollte der Winkelmessfehler, der durch die Statorkupplung verursacht wird, geringer sein als die Messgenauigkeit des Drehgebers. Neben Winkelmesseinrichtungen sind auch Messgeräte, die mechanische Messgrößen, wie etwa die Winkelgeschwindigkeit, die Winkelbeschleunigung oder das Drehmoment messen, vermittels dieser Statorkupplung an den Stator einer Antriebseinrichtung ankoppelbar.

Die Statorkupplung weist eine Drehmomentstütze auf, die die eigentliche Aufgabe der Verdrehsicherung hat. Diese besteht aus einer ringartigen Grundplatte, an der zwei Laschen zur Befestigung des Drehgebers und zwei Laschen zur Befestigung an der Antriebseinrichtung vorgesehen sind. Die Drehmomentstütze besteht aus Federstahl um radiale Scherbewegungen und insbesondere axiale Bewegungen, beispielsweise bei der Montage des Drehgebers an die Antriebseinrichtung, wie in der DE 102 16 376 A1 beschrieben, zuzulassen. Aus der EP 1225428 A2 ist ebenfalls eine Einrichtung nach dem Oberbegriff bekannt.

Die Montage dieser Anordnungen gestaltet sich jedoch bei beschränktem Bauraum als schwierig, besonders dann, wenn das Gehäuse der Antriebseinrichtung (Stator) so geformt ist, dass dieses den Drehgeber umschließt und dieser nur durch eine axiale Öffnung montiert werden kann, deren Durchmesser wenig größer ist, als der des Drehgebers. Die Statorkupplung Encoderwelle, lässt sich noch, insbesondere dank der in der DE 102 16 376 A1 beschriebenen Ausgestaltung, mit der Welle der Antriebseinrichtung verbinden. Jedoch wird es mit kleiner werdenden Komponenten immer schwieriger die Drehgeber-Statorkupplung Einheit an die Antriebseinheit zu montieren. Zumeist werden dies angeschraubt. Dabei besteht das besondere Problem der Einführung der kleinen Schrauben in die entsprechenden Öffnungen. Aus der JP 2000-46244 A ist eine Rutschsicherung für eine Schraube an einen Rohrhalterung bekannt.

Die Erfindung löst diese Aufgabe, indem eine neue Drehwinkelmesseinrichtung geschaffen ist, deren Drehmomentstütze Haltemittel aufweist zum Halten von Befestigungsmitteln, die in der Regel aus Schrauben bestehen. Damit ist die Montage des Drehgebers an die Antriebseinheit erheblich vereinfacht und kann entsprechend schnell und problemlos erfolgen. Dies gilt umso mehr je kleiner der Drehgeber und damit die Befestigungsschrauben sind. Die Befestigungsschrauben können nicht mehr verloren gehen. Ein Verlieren könnte unter Umständen größere Montagezeiten oder Maschinenstillstandszeiten verursachen, was durch die Erfindung sicher vermieden werden kann.

Da die Montage mit der Erfindung vereinfacht ist und die Befestigungsschrauben nicht von Hand eingeführt werden müssen, kann die erfindungsgemäße Drehwinkelmesseinrichtung in kleinere Bauräume montiert werden. Insbesondere für Drehgeber mit kleinen geometrischen Abmessungen, für deren Einbau meist nur ein beschränkter Bauraum zur Verfügung steht, ist diese Konstruktion daher vorteilhaft. Die Befestigungsmittel müssen lediglich mit einem geeigneten Werkzeug, beispielsweise einem Schraubendreher, zugänglich sein.

Die Haltemittel sind integraler Bestandteil der Befestigungslaschen, indem sie jeweils gebildet sind durch zwei Klemmlaschen, die Endstücke der Befestigungslaschen sind und das Befestigungsmittel festklemmen.

In konstruktiv einfacher Weise sind die Klemmlaschen gebildet durch zwei übereinanderliegende Laschen, die jeweils eine Bohrung zur Aufnahme des Befestigungsmittels aufweisen, wobei im entspannten Zustand der Klemmlaschen die Bohrungen leicht parallel versetzt sind, so dass ein die Bohrungen durchsetzendes Befestigungsmittel im entspannten Zustand eingeklemmt gehalten wird.

Bevorzugt sind die Klemmlaschen zu einem eine etwa ovalartige Form aufweisenden Ende der jeweiligen zweiten Befestigungslasche gebogen. Dadurch können die zweiten Befestigungslaschen, wenn die Drehmomentstütze aus einem federelastischen Material, beispielsweise Federstahl, besteht, federnd ausgebildet werden, wobei sich die Federkraft durch Zusammendrücken der Ovalform ergibt.

Dies ist besonders vorteilhaft, wenn die Statorkupplung eine Montageplatte zur Montage der Statorkupplung an den stationären Teil des Antriebs aufweist, so dass die Montageplatte, wie an sich aus dem Stand der Technik (DE 102 16 376 A1) bekannt, in axialer Richtung federnd beweglich gehalten ist, wobei keinerlei zusätzliche Teile verwendet wurden.

Die Befestigungslaschen der Drehmomentstütze der erfindungsgemäßen Drehwinkelmesseinrichtung weisen somit Haltemittel zum Halten von Befestigungsmitteln auf, die integraler Bestandteil der Befestigungslasche sind und gleichzeitig eine Form aufweisen (oval), die eine federnde Befestigung erlaubt.

Im Nachfolgenden wird die Erfindung anhand eines Ausführungsbeispiels unter Bezugnahme auf die Zeichnungen im Einzelnen erläutert. In der Zeichnung zeigen:
- **Fig. 1**: Eine erfindungsgemäße Drehwinkelmesseinrichtung;
- **Fig. 2**: die Drehwinkelmesseinrichtung aus Fig. 1 ohne Encoderwelle von einer Seite gesehen;
- **Fig. 3 und 4**: Ansichten einer Statorkupplung der Drehwinkelmesseinrichtung aus Fig. 1;
- **Fig. 5 und 6**: Detailansichten der Halterung eines Befestigungsmittels.

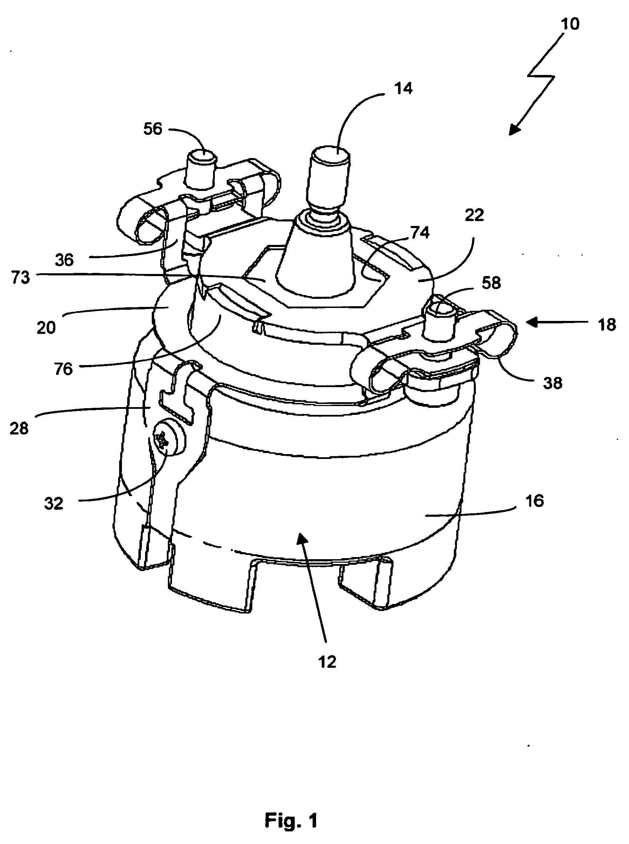

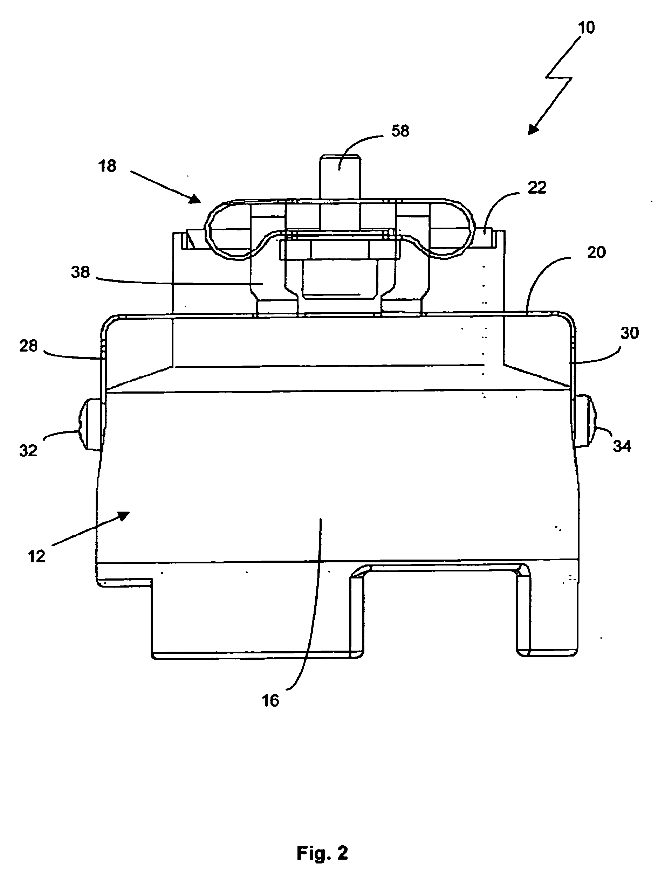

Eine in Fig. 1 und 2 dargestellte Drehwinkelmesseinrichtung 10 weist einen Drehgeber 12 mit einer Encoderwelle 14 auf. Die Encoderwelle 14 wird mit einer nicht dargestellten Welle eines zu messenden Antriebssystems drehfest verbunden, so dass die Rotation der Encoderwelle 14 der Welle des Antriebssystems entspricht und die Drehung der Wellen somit über den Drehgeber 12 gemessen werden können. Dazu muss sichergestellt sein, dass sich ein Gehäuse 16 des Drehgebers 12 nicht mitdrehen kann. Deshalb wird in der Regel das Gehäuse 16 drehfest mit einem nicht dargestellten stationären Teil des zu messenden Antriebssystems verbunden.

Diese drehfeste Verbindung der stationären Teile des Drehgebers 12 und des Antriebs sind über eine Statorkupplung 18 miteinander verbindbar. Die Statorkupplung weist eine Drehmomentstütze 20 und eine Montageplatte 22 auf. Die Drehmomentstütze 20 bewirkt die eigentliche Verdrehsicherung der Statoren, also Drehgebergehäuse 16 und stationärer Teil des zu messenden Antriebssystems. Die Montageplatte 22 dient lediglich der einfachen Montage des Drehgebers 12 an den Antrieb, wie weiter unten bei der Beschreibung des Montageprozesses im Einzelnen erläutert.

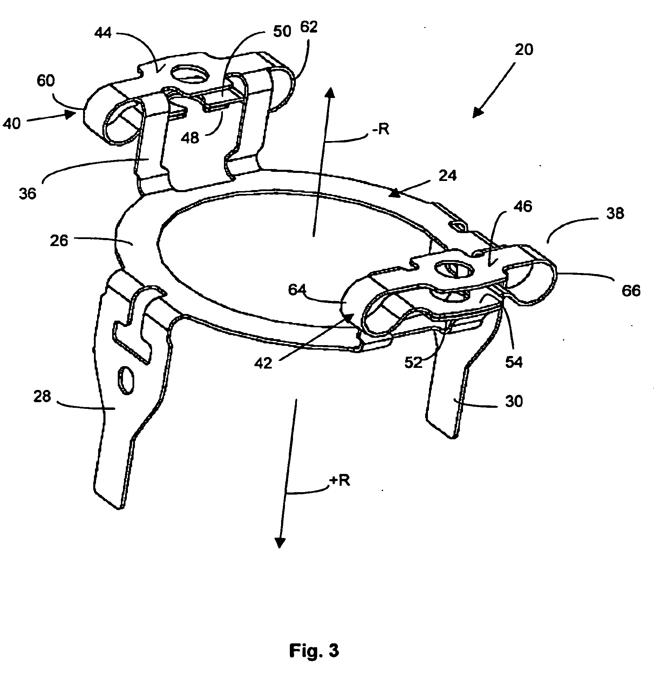

Die Drehmomentstütze 20 des dargestellten Ausführungsbeispiels ist in Fig. 3 separat dargestellt. Sie besteht aus einem einstückigen Stanz- und Biegeteil 24, das eine ringartige Grundplatte 26 aufweist, von dessen Rand zwei erste im wesentlichen diametral angeordnete Befestigungslaschen 28 und 30 parallel verlaufend in eine erste axiale Richtung +R abragen. Mit diesen ersten Befestigungslaschen 28 und 30 ist die Drehmomentstütze 20 an dem Gehäuse 16 über Befestigungsmittel, insbesondere Schrauben 32 und 34, festlegbar. In entgegengesetzter axialer Richtung -R ragen zweite Befestigungslaschen 36 und 38 ab, die ebenfalls in etwa diametral angeordnet sind und die der Befestigung der Drehmomentstütze 20 an dem Stator des zu messenden Antriebssystems dienen. Die Drehmomentstütze 20 bildet ein Federparallelogramm, welches in besonderer Weise eine winkeltreue Ankopplung des Drehgebers 12 an das zu messende Antriebssystem gewährleistet. Die Drehmomentstütze 20 besteht bevorzugt aus einem federelastischen Material hoher Wechselfestigkeit, wie etwa Federstahl.

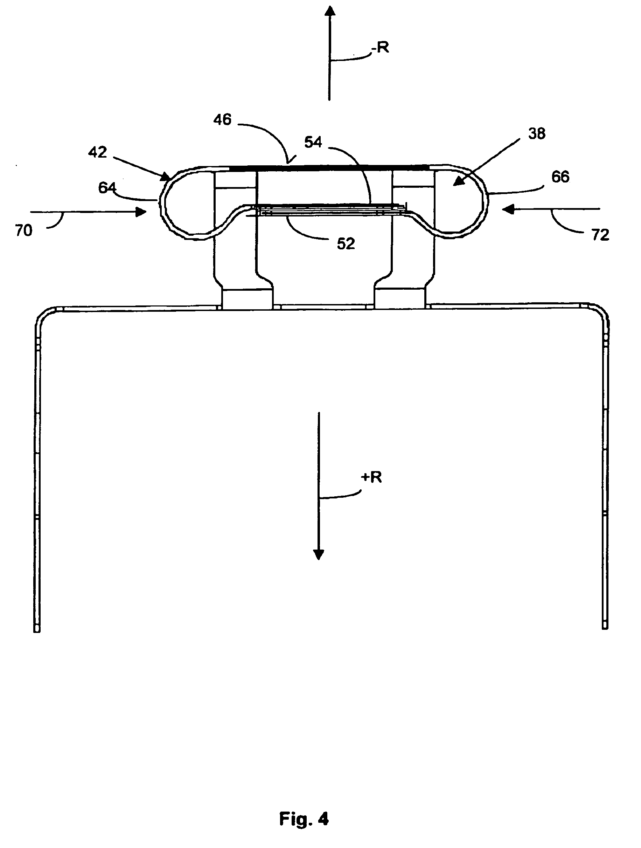

Die Enden 40 und 42 der zweiten Befestigungslaschen 36 und 38 sind speziell entsprechend der Erfindung ausgebildet. Zunächst sind die Enden 40 und 42 derart abgebogen, dass jeweils eine Befestigungsebene 44 und 46 entsteht, die in etwa parallel zur Grundplatte 26 liegen. Wie besonders deutlich in der Seitenansicht der Fig. 4 zu erkennen ist, sind desweiteren Endlaschen 48 und 50 der Befestigungslasche 36 und Endlaschen 52 und 54 der Befestigungslasche 38 derart um ca. 180° umgebogen, dass eine grob ovalartige Form entsteht. Zumindest liegen die Endlaschen 48 und 50 bzw. 52 und 54 wieder parallel zu der Befestigungsebene 44 bzw. 46 und liegen übereinander.

Damit die zweiten Befestigungslaschen 36 und 38 an dem Stator des Antriebs befestigt werden können, weisen die Befestigungsebenen 44 und 46 sowie die Endlaschen 48 und 50 bzw. 52 und 54 Bohrungen auf, die von Befestigungsmitteln, bevorzugt Befestigungsschrauben 56 und 58, durchsetzbar sind.

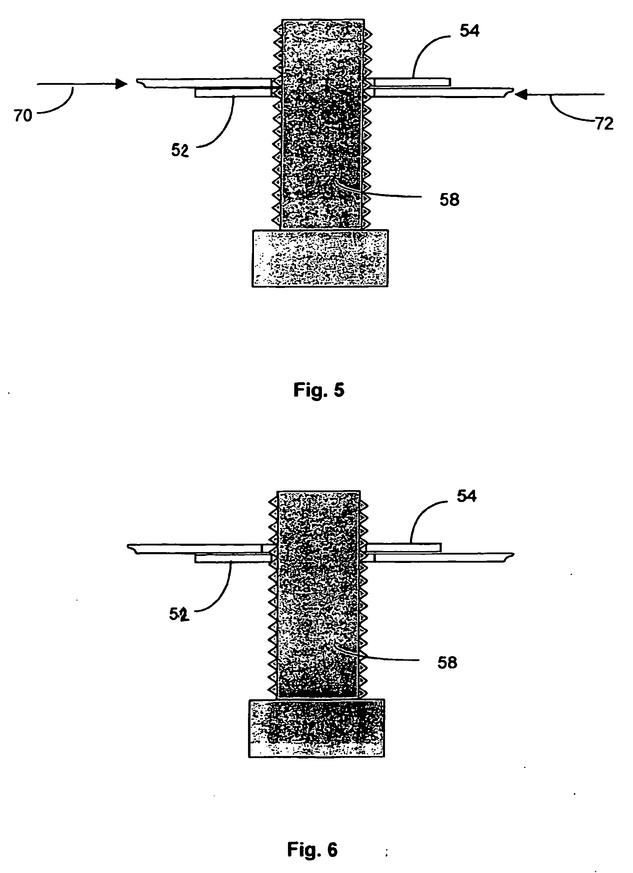

Damit die Befestigungsschrauben 56 und 58 nicht während der Montage aus den Bohrungen fallen können, sind die Endlaschen 48 und 50 bzw. 52 und 54 speziell ausgebildet. Im entspannten Zustand der Enden 40 und 42 fluchten die Bohrungen in den jeweils übereinanderliegenden Endlaschen 48 und 50 bzw. 52 und 54 nicht exakt. Erst Druck auf die Bögen 60 und 62 bzw. 64 und 66 der Enden 48 und 50 in Richtung der Pfeile 70 und 72 bringt die Bohrungen in eine Flucht, so dass problemlos eine Befestigungsschraube 56 oder 58 eingeführt werden kann, wie in Fig. 5 dargestellt. Wenn die Befestigungsschraube 56 oder 58 eingeführt ist, wird der Druck weggenommen. Die Endlaschen 48 und 50 bzw. 52 und 54 gehen wieder ein Stück weit auseinander und die Befestigungsschraube 56 oder 58 ist in den Bohrungen verklemmt gehalten, wie in Fig. 6 dargestellt.

Die Funktion der Statorkupplung 18 wird aus der folgenden schrittweisen Beschreibung der Montage der Drehwinkelmessenrichtung 12 deutlich.

Zunächst ist die Statorkupplung 14 über die Schrauben 32 und 34 an dem Drehgeber 12 befestigt, wobei die Encoderwelle 14 mit einem sechseckigen Ansatz 73 in einer Aussparung 74 der Montageplatte 22 formschlüssig eingesetzt ist. Über die federelastischen Enden 40 und 42, an deren Endlaschen 48 und 50 bzw. 52 und 54 sich die Montageplatte 22 in Richtung -R abstützt, ist die Montageplatte 22 in ihrer Position gehalten. Die Enden 40 und 42 bilden somit Spannelemente zum Halten der Montageplatte 22. Das Drehgebergehäuse 16, die Encoderwelle 14 und die Statorkupplung 18 mit ihrer Montageplatte 22 bilden eine verdrehfeste Einheit, wie sie in Fig. 1 dargestellt ist. Die Befestigungsschrauben 56 und 58 sind ebenfalls bereits in ihrer in Fig. 1 und 2 dargestellten Position in den Bohrungen der Befestigungslaschen 36 und 38 eingeführt und gehalten.

Dann wird die Encoderwelle 14 in geeigneter Weise mit einer Antriebswelle des zu messenden Antriebs fest verbunden, z.B. verschraubt, indem das Drehgebergehäuse 16 und damit über die Statorkupplung 18 mit Montageplatte 22 letztlich die Encoderwelle 14 gedreht wird. Es kann vorteilhaft sein, dass Bereiche 76 des Drehgebergehäuses 16 ebenfalls in eine Aussparung der Montageplatte 22 eingreifen, so dass das Drehgebergehäuse 16 direkt und nicht nur indirekt über die Drehmomentstütze 20 gegenüber der Montageplatte 22 verdrehgesichert ist. Dann kann gegebenenfalls ein größeres Drehmoment zum Festziehen der Encoderwelle 14 aufgebracht werden ohne dass die Gefahr besteht, die Drehmomentstütze 20 zu verbiegen.

Nachdem die Encoderwelle 14 mit der Antriebswelle verbunden wurde, werden die schon vormontierten und durch die Endlaschen festgehaltenen Befestigungsschrauben 56 und 58 angezogen. Dadurch wird die Montageplatte 22 in Richtung - R bewegt und letztlich von dem Ansatz 73 abgehoben, wodurch die Encoderwelle 14 freigegeben ist. Die Abmessungen der Wellen sind derart bemessen, dass beim Anziehen der Befestigungselemente 56 und 58 die Montageplatte 22 vollständig von dem Ansatz 73 abgehoben wird. Die erfindungsgemäße Drehwinkelmesseinrichtung 10 ist montiert und betriebsbereit.

## Patentansprüche

1. Drehwinkelmesseinrichtung zur Messung von winkelabhängigen Messgrößen mit einem Drehgeber (12) mit einer Encoderwelle (14), welche in einem Drehgebergehäuse (16) gelagert ist, mit einer eine Drehmomentstütze (20) aufweisenden Statorkupplung (18) zur verdrehfesten Verbindung des Drehgebergehäuses (16) mit einem stationären Teil eines zu messenden Antriebssystems, wobei die Drehmomentstütze (20) wenigstens zwei erste Befestigungslaschen (28, 30) zur Befestigung der Drehmomentstütze (20) an das Drehgebergehäuse (16) und wenigstens zwei zweite Befestigungslaschen (36, 38) zur Befestigung der Drehmomentstütze (20) an den stationären Teil aufweist, **dadurch gekennzeichnet, dass** die zweiten Befestigungslaschen (36, 38) Haltemittel (48, 50; 52, 54) aufweisen zum Halten von Befestigungsmittel (56, 58), wobei die Haltemittel (48, 50; 52, 54) jeweils gebildet sind durch zwei Klemmlaschen (48, 50; 52, 54), wobei die Klemmlaschen (48, 50; 52, 54) gebildet sind durch zwei übereinanderliegende Endlaschen (48, 50; 52, 54), die jeweils eine Bohrung zur Aufnahme des Befestigungsmittels (56, 58) aufweisen und im entspannten Zustand der Klemmlaschen (48, 50; 52, 54) die Bohrungen leicht parallel versetzt sind.

2. Drehwinkelmesseinrichtung nach Anspruch 1, **dadurch gekennzeichnet, dass** die Endlaschen (48, 50; 52, 54) zu einem grob ovalartige Form aufweisenden Ende der jeweiligen zweiten Befestigungslasche (36, 38) gebogen sind.

3. Drehwinkelmesseinrichtung nach einem der vorhergehenden Ansprüche, **dadurch gekennzeichnet, dass** die Statorkupplung (18) eine Montageplatte (22) zur Montage der Statorkupplung (18) an den stationären Teil des Antriebs aufweist.

4. Drehwinkelmesseinrichtung nach Anspruch 3, **dadurch gekennzeichnet, dass** die Drehmomentstütze (20) wenigstens ein Spannelement aufweist, das im nichtmontierten Zustand des Drehgebers (12) die Montageplatte (22) an dem Drehgeber (12) festhält und zur Montage des Drehgebers (12) an das stationäre Teil des Antriebs gegen seine Spannkraft verformbar ist.

5. Drehwinkelmesseinrichtung nach Anspruch 4, **dadurch gekennzeichnet, dass** das Spannelement gebildet ist durch die die ovalartige Form aufweisenden Enden (40, 42) der zweiten Befestigungslaschen (36, 38), deren Spannung sich durch Zusammendrücken der Ovalform durch die Befestigungsmittel (56, 58) ergibt.

6. Drehwinkelmesseinrichtung nach einem der vorhergehenden Ansprüche, **dadurch gekennzeichnet, dass** die Drehmomentstütze aus einem federelastischen Material besteht, beispielsweise Federstahl.

## Claims

1. Rotation angle measurement device for measurement of angle-dependent measurement variables, having a rotary encoder (12) with an encoder shaft (14) which is mounted in a rotary encoder housing (16), having a stator coupling (18), which has a torque support (20), for rotationally fixed connection of the rotary encoder housing (16) to a stationary part of a drive system to be measured, with the torque support (20) having at least two first attachment lugs (28, 30) for attachment of the torque support (20) to the rotary encoder housing (16), and having at least two second attachment lugs (36, 38) for attachment of the torque support (20) to the stationary part, **characterized in that** the second attachment lugs (36, 38) have holding means (48, 50; 52, 54) for holding attachment means (56, 58), whereby the holding means (48, 50; 52, 54) are each formed by two clamping lugs (48, 50; 52, 54) whereby the clamping lugs (48, 50; 52, 54) are formed by two end lugs (48, 50; 52, 54) which are located one above the other, each have a hole for holding the attachment means (56, 58), with the holes being offset slightly parallel in the unstressed state of the clamping lugs (48, 50; 52, 54).

2. Rotation angle measurement device according to Claim 1, **characterized in that** the end lugs (48, 50; 52, 54) are curved to form an end, which has a roughly oval shape, of the respective second attachment lug (36, 38).

3. Rotation angle measurement device according to one of the preceding claims, **characterized in that** the stator coupling (18) has a mounting plate (22) for mounting the stator coupling (18) on the stationary part of the drive.

4. Rotation angle measurement device according to Claim 3, **characterized in that** the torque support (20) has at least one tensioning element which, when the rotary encoder (12) is not in the installed state, firmly holds the mounting plate (22) on the rotary encoder (12), and can be deformed against its tensioning force in order to mount the rotary encoder (12) on the stationary part of the drive.

5. Rotation angle measurement device according to Claim 4, **characterized in that** the tensioning element is formed by those ends (40, 42) of the second attachment lugs (36, 38) which have the oval shape and whose stress is produced by compression of the oval shape by the attachment means (56, 58).

6. Rotation angle measurement device according to one of the preceding claims, **characterized in that** the torque support is composed of a resiliently elastic material, for example spring steel.

## Revendications

1. Dispositif de mesure d'angle de rotation destiné à la mesure de grandeurs de mesure dépendant de l'angle, comportant un indicateur de rotation (12) avec un arbre d'encodeur (14), qui est monté dans un boîtier (16) d'indicateur de rotation, un accouplement de stator (18) pourvu d'un support (20) de couple de rotation pour la liaison solidaire en rotation du boîtier (16) d'indicateur de rotation avec une partie stationnaire d'un système d'entraînement à mesurer, le support (20) de couple de rotation comportant au moins deux premiers colliers de fixation (28, 30) pour la fixation du support (20) de couple de rotation au boîtier (16) d'indicateur de rotation, et au moins deux deuxièmes colliers de fixation (36, 38) pour la fixation du support (20) de couple de rotation sur la partie stationnaire, **caractérisé en ce que** les deuxièmes colliers de fixation (36, 38) comportent des moyens de retenue (48, 50 ; 52, 54) pour la retenue de moyens de fixation (56, 58) et les moyens de retenue (48, 50 ; 52, 54) sont respectivement constitués de deux colliers de serrage (48, 50 ; 52, 54), et les colliers de serrage (48, 50 ; 52, 54) sont constitués de deux colliers d'extrémité (48, 50 ; 52, 54) situés l'un au-dessus de l'autre, qui comportent chacun un perçage pour le logement du moyen de fixation (56, 58), et **en ce que**, à l'état détendu des colliers de serrage (48, 50 ; 52, 54), les perçages sont légèrement décalés parallèlement.

2. Dispositif de mesure d'angle de rotation selon la revendication 1, **caractérisé en ce que** les colliers d'extrémité (48, 50 ; 52, 54) sont coudés vers une extrémité de forme grossièrement ovalisée des deuxièmes colliers de fixation (36, 38) respectifs.

3. Dispositif de mesure d'angle de rotation selon l'une des revendications précédentes, **caractérisé en ce que** l'accouplement de stator (18) comporte une plaque de montage (22) pour le montage de l'accouplement de stator (18) sur la partie stationnaire de l'entraînement.

4. Dispositif de mesure d'angle de rotation selon la revendication 3, **caractérisé en ce que** le support (20) de couple de rotation comporte au moins un élément de serrage qui, à l'état non monté de l'indicateur de rotation (12), maintient la plaque de montage (22) sur l'indicateur de rotation (12), et qui pour le montage de l'indicateur de rotation (12) sur la partie stationnaire de l'entraînement, peut se déformer à l'opposé de sa force de serrage.

5. Dispositif de mesure d'angle de rotation selon la revendication 4, **caractérisé en ce que** l'élément de serrage est constitué des deuxièmes colliers de fixation (36, 38) comportant les extrémités de forme ovalisée (40, 42), dont le serrage résulte de la compression de la forme ovale par les moyens de fixation (56, 58).

6. Dispositif de mesure d'angle de rotation selon l'une des revendications précédentes, **caractérisé en ce que** le support de couple de rotation est constitué d'un matériau élastique à ressort, par exemple d'un acier à ressort.
